(19) Europäisches Patentamt
European Patent Office
Office européen des brevets

(11) EP 2 386 606 B1

(12) **FASCICULE DE BREVET EUROPEEN**

(45) Date de publication et mention de la délivrance du brevet:
**21.03.2018 Bulletin 2018/12**

(21) Numéro de dépôt: **10161698.5**

(22) Date de dépôt: **30.04.2010**

(51) Int Cl.:
*C08L 95/00* (2006.01)
*C08K 5/00* (2006.01)
*C08K 5/25* (2006.01)
*C08K 5/092* (2006.01)
*C08K 5/06* (2006.01)
*C08K 5/21* (2006.01)
*C08K 5/20* (2006.01)

# (54) UTILISATION DE DÉRIVÉS ORGANOGELATEURS DANS DES COMPOSITIONS BITUMINEUSES POUR AMÉLIORER LEUR RÉSISTANCE AUX AGRESSIONS CHIMIQUES

EINSATZ VON ORGANOGEL-BILDENDEN DERIVATEN IN BITUMINÖSEN ZUSAMMENSETZUNGEN ZUR VERBESSERUNG IHRER WIDERSTANDSKRAFT GEGEN CHEMISCHE AGGRESSIONEN

USE OF ORGANOGELATOR DERIVATIVES IN BITUMINOUS COMPOSITIONS TO IMPROVE THE RESISTANCE THEREOF TO CHEMICAL ATTACKS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**16.11.2011 Bulletin 2011/46**

(60) Demande divisionnaire:
**14175170.1 / 2 787 043**

(73) Titulaire: **TOTAL MARKETING SERVICES**
**92800 Puteaux (FR)**

(72) Inventeurs:
- **Dreessen, Sylvia**
  **69360 Solaize (FR)**
- **Lapalu, Laurence**
  **69100 Villeurbanne (FR)**
- **Chaminand, Julien**
  **69120 Vaulx en Velin (FR)**
- **Vincent, Régis**
  **69520 Grygny (FR)**

(74) Mandataire: **Hirsch & Associés**
**137, rue de l'Université**
**75007 Paris (FR)**

(56) Documents cités:
**WO-A1-02/16499**
**WO-A1-2005/105926**
**WO-A1-2006/087475**
**WO-A1-2009/101275**
**WO-A2-2004/060991**
**WO-A2-2008/107551**

- **DATABASE COMPENDEX [Online] ENGINEERING INFORMATION, INC., NEW YORK, NY, US; 4 août 2009 (2009-08-04), ISARE B ET AL: "The weak help the strong: Low-molar-mass organogelators harden bitumen" XP002597137 Database accession no. E20100512675949 -& LANGMUIR 20090804 AMERICAN CHEMICAL SOCIETY USA, vol. 25, no. 15, 4 août 2009 (2009-08-04), pages 8400-8403, XP002597138 DOI: DOI:10.1021/LA804086H**
- **HWANG ET AL: "Geochemical comparison of reservoir solid bitumens with diverse origins", ORGANIC GEOCHEMISTRY, PERGAMON, AMSTERDAM, NL, vol. 29, no. 1-3, 1 January 1998 (1998-01-01), pages 505-517, XP005812732, ISSN: 0146-6380, DOI: 10.1016/S0146-6380(98)00078-3**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 386 606 B1

Printed by Jouve, 75001 PARIS (FR)

## Description

### DOMAINE TECHNIQUE

La présente invention appartient au domaine des bitumes. Plus spécifiquement, elle concerne l'utilisation de dérivés de type organogélateur dans des compositions bitumineuses pour améliorer leur résistance aux agressions chimiques.

### ART ANTERIEUR

Il est connu d'utiliser des compositions bitumineuses, notamment des compositions bitume/polymère réticulées, comme revêtements de surfaces diverses et, en particulier, comme revêtements routiers, à condition que ces compositions présentent en combinaison un certain nombre de caractéristiques, notamment mécaniques.

Pour maintenir et/ou améliorer les caractéristiques et notamment les propriétés mécaniques d'un bitume conventionnel, on utilise depuis longtemps des compositions bitumineuses dans lesquelles le bitume (formé d'un ou plusieurs types de bitumes) est mélangé avec un ou plusieurs polymères fonctionnels, notamment des élastomères de styrène et de butadiène, ces élastomères étant éventuellement réticulées chimiquement in situ, éventuellement à l'aide d'un agent de couplage ou de réticulation, par exemple le soufre ou l'un au moins de ses précurseurs.

Des caractéristiques mécaniques optimisées sont notamment cruciales pour les applications revêtements routiers.

Au-delà des propriétés mécaniques, il convient de tenir compte pour les bitumes, de leur sensibilité à certains agents chimiques. Ces agents chimiques agressifs peuvent être, par exemple des solvants hydrocarbonés, en particulier des solvants pétroliers tels que les kérosènes, les gazoles et/ou les essences ou bien encore des produits, en particulier des fluides, utilisés pour le déverglaçage et/ou le dégivrage et/ou le déneigement des avions et des zones de roulage. Ces fluides sont par exemple des solutions aqueuses salines de potassium, sodium, magnésium et/ou calcium, et/ou des compositions à base d'éthylène glycol et/ou à base de propylène glycol.

L'effet agressif de tels agents chimiques se cumule avec les contraintes de trafic intense, notamment des lourds véhicules et des intempéries, ce qui a pour effet néfaste d'accroître la dégradation rapide des chaussées, en particulier des chaussées aéronautiques.

Cette sensibilité des bitumes à ces agents chimiques agressifs, aux agressions chimiques est plus spécialement gênante pour les bitumes constituant par exemple les tarmacs et les revêtements de pistes d'aéroport, qui sont réalisés en enrobés bitumineux (conglomérat bitume/granulats). En effet, ces tarmacs et revêtements d'aéroport sont fréquemment souillés par des égouttures de kérosène, lors du remplissage des réservoirs des avions, par des fuites ou autres déversements accidentels de produits pétroliers. En outre, ils sont également exposés aux différents fluides utilisés par temps froids pour éliminer la glace, le givre et/ou la neige sur les avions et sur les pistes.

Les revêtements des stations services ainsi que des locaux industriels de dépôts d'hydrocarbures peuvent être également sujets à ce même problème de résistance des revêtements bitumineux aux agents chimiques agressifs que sont les solvants hydrocarbonés et/ou les fluides de déverglaçage/dégivrage/déneigement.

Les chaussées routières conventionnelles sont naturellement elles aussi exposées à ce type d'agressions chimiques.

Pour tenter de remédier à cela, il a été proposé d'incorporer divers additifs dans des bitumes.

Ainsi le brevet EP1311619 décrit l'utilisation de cires dans des bitumes pour augmenter leur résistance aux hydrocarbures. Les cires sont en particulier des cires synthétiques issues du procédé de synthèse Fischer Tropsch.

La société demanderesse a proposé dans la demande de brevet EP1756228 d'incorporer au bitume des polyamines à chaînes grasses, de préférence des polyamines à chaînes grasses obtenues en faisant réagir des polyalkylène polyamines à chaînes grasses de formule générale $R-NH-(CH_2-CH_2-CH_2-NH)_n-H$ où R représente une chaîne hydrocarbonée linéaire, saturée et/ou instaurée, de 8 à 22 atomes de carbone, n un nombre entier de 1 à 5 avec de l'acide formique, pour améliorer leur résistance aux agressions chimiques et en particulier aux hydrocarbures. Ces compositions sont exclues de la présente invention.

La société demanderesse a aussi proposé dans le brevet EP1572807 d'incorporer au bitume des polymères oléfiniques fonctionnalisés choisis parmi les terpolymères statistiques d'éthylène, d'acrylate ou de méthacrylate d'alkyle et d'acrylate ou de méthacrylate de glycidyle, pour améliorer la résistance aux solvants pétroliers.

Le brevet EP0900253 décrit l'utilisation de copolymères d'éthylène et d'acétate de vinyle dans un bitume pour améliorer la résistance au kérosène.

La demande de brevet WO2006/087475 décrit des matériaux présentant la propriété d'élasticité caoutchoutique constitués de molécules de type organogélatrices, lesdits matériaux étant résistants à la plupart des solvants.

## RESUME DE L'INVENTION

Dans la continuité de ses travaux, la société demanderesse a découvert de manière surprenante qu'un autre type d'additif, habituellement utilisé pour d'autres applications, permettait d'augmenter la résistance des compositions bitumineuses aux kérosènes, aux essences et/ou aux gazoles.

Ainsi la société demanderesse s'est aperçue que l'utilisation dans une composition bitumineuse de 0,1 à 20% en masse d'un dérivé organogélateur ayant une masse molaire inférieure ou égale à 2000 $gmol^{-1}$ et comprenant au moins un donneur de liaisons hydrogène **D**, au moins un accepteur de liaisons hydrogène **A** et au moins un compatibilisant **C** dans le bitume, le dit compatibilisant **C** comprenant un groupe choisi parmi:

- au moins une chaîne hydrocarbonée linéaire comprenant au moins 4 atomes de carbone, ou
- au moins un cycle aliphatique de 3 à 8 atomes, ou
- au moins un cycle aromatique, ou

  - au moins un système polycyclique condensé aliphatique, ou en partie aromatique ou encore entièrement aromatique, chaque cycle comprenant 5 ou 6 atomes, pris seuls ou en mélange, permettait d'accroître la résistance des compositions bitumineuses aux kérosènes, aux essences et/ou aux gazoles, ledit dérivé organogélateur étant choisi parmi les composé de formule générale (**IV**) $R_7$-$(COOH)_z$, avec $R_7$ qui représente le compatibilisant **C** étant une chaîne hydrocarbonée linéaire comprenant au moins 4 atomes de carbone et z un entier égal à 2.

Les compositions bitumineuses comprenant de tels additifs sont connues en tant que telles dans la demande de la société demanderesse WO2008107551. La société demanderesse a maintenant découvert une nouvelle utilisation desdites compositions.

## BREVE DESCRIPTION

Il est décrit que l'utilisation d'au moins un dérivé organogélateur dans une composition bitumineuse pour améliorer la résistance aux agents chimiques agressifs de ladite composition bitumineuse, ledit dérivé ayant une masse molaire inférieure ou égale à 2000 $g.mol^{-1}$ et comprenant au moins un donneur de liaisons hydrogène D, au moins un accepteur de liaisons hydrogène **A** et au moins un compatibilisant **C** dans le bitume, le dit compatibilisant **C** comprenant un groupe choisi parmi:

- au moins une chaîne hydrocarbonée linéaire comprenant au moins 4 atomes de carbone, ou
- au moins un cycle aliphatique de 3 à 8 atomes, ou
- au moins un cycle aromatique, ou
- au moins un système polycyclique condensé aliphatique, ou en partie aromatique ou encore entièrement aromatique, chaque cycle comprenant 5 ou 6 atomes, pris seuls ou en mélange, à l'exclusion de la N, N'-éthylène bis(stéaramide) et à l'exclusion des polyamines à chaînes grasses obtenues en faisant réagir des polyalkylène polyamines à chaînes grasses de formule générale R-NH-$(CH_2$-$CH_2$-$CH_2$-$NH)_n$-H où R représente une chaîne hydrocarbonée linéaire, saturée et/ou instaurée, de 8 à 22 atomes de carbone, n un nombre entier de 1 à 5 avec de l'acide formique.

De préférence, le donneur **D** comprend un hétéroatome porteur d'un atome d'hydrogène, choisi parmi l'azote N, l'oxygène O et/ou le soufre S.

De préférence, l'accepteur **A** comprend un hétéroatome porteur de doublets électroniques choisi parmi l'oxygène O, le soufre S, l'azote N et/ou le phosphore P.

Dans un premier mode de réalisation ne faisant pas partie de l'invention, il est décrit un dérivé organogélateur ayant pour formule générale (**I**) :

$$R_1\text{-}(NH)_nCONH\text{-}(X)_m\text{-}NHCO(NH)_n\text{-}R_2,$$

où

- au moins un des groupes $R_1$, $R_2$ et/ou X représente indépendamment l'un de l'autre le compatibilisant **C**,
- n et m sont des entiers ayant une valeur de 0 ou 1 indépendamment l'un de l'autre.

De préférence, n et m ont une valeur de 0 et $R_1$ et/ou $R_2$ représente indépendamment l'un de l'autre au moins une chaîne hydrocarbonée linéaire comprenant au moins 4 atomes de carbone, de préférence de 4 à 22 atomes de carbone.

De préférence, n et m ont une valeur de 0 et $R_1$ et/ou $R_2$ représente indépendamment l'un de l'autre au moins un cycle aromatique, de préférence un noyau benzène ou un noyau benzène substitué.

De préférence, le dérivé organogélateur est le 2',3-bis[[3-[3,5-di-tert-butyl-4-hydroxyphenyl]propionyl]]propionohydrazide.

Dans un second mode de réalisation ne faisant pas partie de l'invention, il est décrit également un dérivé organogélateur ayant pour formule générale (**II**) :

$$(R_3\text{-NHCO})_x\text{-Z-}(\text{NHCO-}R_4)_y,$$

où

- au moins un des groupes $R_3$, $R_4$ et/ou Z représente indépendamment l'un de l'autre le compatibilisant **C**,
- x et y sont des entiers différents de valeur variant de 0 à 3 et tels que x+y=3.

Dans un troisième mode de réalisation ne faisant pas partie de l'invention, il est décrit également un dérivé organogélateur ayant pour formule générale (**III**) où au moins un des groupes $R_5$ et/ou $R_6$ représente indépendamment l'un de l'autre le compatibilisant **C** :

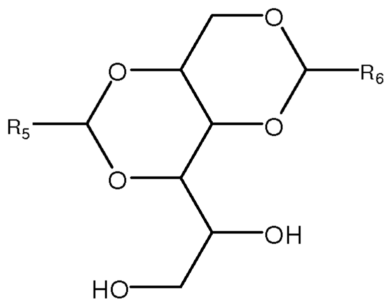

**(III)**

De préférence, $R_5$ et/ou $R_6$ représente indépendamment l'un de l'autre un cycle aromatique, de préférence un noyau benzène ou un noyau benzène substitué.

De préférence, le dérivé organogélateur est le 1,3:2,4-Di-O-benzylidène-D-sorbitol.

Dans un quatrième mode de réalisation, selon l'invention, le dérivé organogélateur a pour formule générale **(IV)** $R_7\text{-(COOH)}_z$ avec $R_7$ qui représente le compatibilisant **C** étant une chaîne hydrocarbonée linéaire comprenant au moins 4 atomes de carbone et z un entier égal à 2.

De préférence, $R_7$ représente une chaîne hydrocarbonée linéaire comprenant de 4 à 22 atomes de carbone.

De préférence, le dérivé organogélateur est choisi parmi les diacides suivants : acide adipique, acide pimélique, acide subérique, acide azélaique, acide sébacique, acide undécanedioïque, acide 1,2-dodécanedioïque ou acide tétradécanedioïque, pris seuls ou en mélange.

Dans un cinquième mode de réalisation ne faisant pas partie de l'invention, il est décrit également un dérivé organogélateur ayant pour formule générale **(V)** :

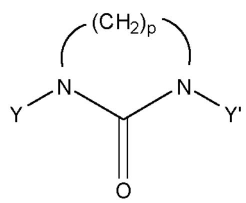

où les groupes Y et/ou Y' représente indépendamment l'un de l'autre, un atome d'hydrogène ou groupe choisi parmi : $-(CH_2)_q-CH_3$, $-(CH_2)_q-NH_2$, $-(CH_2)_q-OH$,$-(CH_2)_q-COOH$ ou

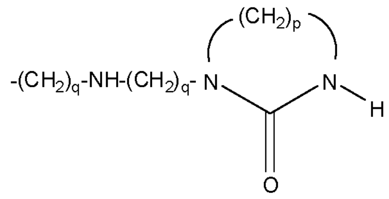

avec q un entier variant de 2 à 18, de préférence de 2 à 10, de préférence de 2 à 4 et p un entier supérieur ou égal à 2, de préférence ayant une valeur de 2 ou 3, de préférence étant entendu que Y et Y' ne peuvent représenter simultanément le groupe $-(CH_2)_q-CH_3$.

Dans un sixième mode de réalisation ne faisant pas partie de l'invention, il est décrit également un dérivé organogélateur ayant pour formule générale **(VI)** : $R_8$-NH-CO-CO-NH-$R_9$ avec $R_8$ et/ou $R_9$ qui représente indépendamment l'un de l'autre le compatibilisant **C.**

De préférence, le dérivé organogélateur a une masse molaire inférieure ou égale à 1000 $g.mol^{-1}$.

La composition bitumineuse comprend de 0,1 à 20% en masse de dérivé organogélateur, de préférence de 0,2 à 15%, plus préférentiellement de 0,5 à 10%, encore plus préférentiellement de 1 à 5%.

De préférence, la composition bitumineuse comprend en outre au moins un polymère.

De préférence, le polymère est un copolymère d'un hydrocarbure monovinyl aromatique et d'un diène conjugué, de préférence de styrène et de butadiène.

De préférence, le copolymère d'un hydrocarbure monovinyl aromatique et d'un diène conjugué possède une teneur en motifs à doubles liaisons 1-2 issus du diène conjugué comprise entre 5% et 50% en masse, par rapport à la masse totale des motifs diène conjugué, de préférence entre 10% et 40%, plus préférentiellement entre 15% et 30%, encore plus préférentiellement entre 20% et 25%, encore plus préférentiellement entre 18% et 23%.

De préférence, la composition bitumineuse comprend un agent réticulant.

De préférence, il s'agit d'améliorer la résistance aux kérosènes, aux essences et/ou aux gazoles de la composition bitumineuse lorsque celle-ci est utilisée en application routière comme couche de surface.

De préférence, il s'agit d'améliorer la résistance aux kérosènes, aux essences et/ou aux gazoles de la composition bitumineuse lorsque celle-ci est en mélange avec des granulats dans un enrobé bitumineux.

## DESCRIPTION DETAILLEE

Par dérivé organogélateur au sens de l'invention, on entend une association de plusieurs dérivés organogélateurs de structure chimique identique ou différente. Dans le bitume, ces dérivés organogélateurs sont capables d'établir entre eux des interactions physiques conduisant à une auto-agrégation avec formation d'un réseau supra-moléculaire 3D qui est responsable de la gélification du bitume. L'empilement des dérivés organogélateurs résulte dans la formation d'un réseau de fibrilles, immobilisant les molécules du bitume.

Aux températures d'usage, allant de 10 à 60°C, les dérivés organogélateurs se lient entre eux de manière non-covalente, notamment par des liaisons hydrogène. Ces liaisons hydrogène disparaissent lorsque le bitume est chauffé à haute température. Ainsi aux températures d'usage, l'organogélateur constitué d'un grand nombre de molécules organogélatrices peut être assimilé à un polymère « supramoléculaire » et confère au bitume ainsi modifié les propriétés d'une composition bitume/polymère classique, notamment au niveau de la dureté. Aux températures d'usage, la gélification due à l'agrégation des dérivés organogélateurs, provoque un épaississement du milieu bitumineux, conduisant à une augmentation de la dureté. Le bitume ne s'écoule plus sous son propre poids, sa dureté aux températures d'usage est accrue par rapport au bitume de départ seul sans additif organogélateur. Lorsque la composition bitumineuse est chauffée, les interactions stabilisant le dérivé organogélateur, disparaissent, et le bitume retrouve les propriétés d'un bitume non additivé, la viscosité de la composition bitumineuse à chaud redevient celle du bitume de départ.

Il a été trouvé de façon tout à fait surprenante que ces dérivés de type organogélateur conférait également aux compositions bitumineuses une résistance accrue aux kérosènes, aux essences et/ou aux gazoles.

Dans le cadre de l'invention, le dérivé organogélateur, comprend plusieurs groupements capables d'établir des liaisons hydrogène. Pour établir ces liaisons hydrogène, le dérivé organogélateur comprend au moins un accepteur de liaisons hydrogène **A**, au moins un donneur de liaisons hydrogène **D.**

Pour pouvoir gélifier et prendre en masse le bitume, le dérivé organogélateur doit être soluble à chaud dans le bitume. Les constituants chimiques principaux du bitume sont les asphaltènes et les maltènes. Les asphaltènes sont des composés notamment hétérocycliques constitués de nombreux noyaux aromatiques et de cycles naphténiques pluricondensés. Les maltènes quant à eux sont principalement constitués de longues chaînes paraffiniques.

Par conséquent, le dérivé organogélateur selon l'invention comprend au moins un groupement chimique **C** compatibilisant le dérivé organogélateur avec les composés chimiques du bitume. Ce compatibilisant **C** peut comprendre,

pris seul ou en mélange, un groupe choisi parmi :

- au moins une longue chaîne hydrocarbonée compatible avec la fraction maltène du bitume c'est-à-dire une chaîne hydrocarbonée linéaire comprenant au moins 4 atomes de carbone, ou
- au moins un cycle aliphatique c'est-à-dire non aromatique de 3 à 8 atomes compatible avec la fraction maltène du bitume, ou
- au moins un cycle aromatique compatible avec la fraction asphaltène du bitume, ou
- au moins un système polycyclique condensé aliphatique, partiellement aromatique ou entièrement aromatique, compatible avec la fraction asphaltène du bitume, chaque cycle comprenant 5 ou 6 atomes.

Le dérivé organogélateur comprend par conséquent au moins un donneur de liaisons hydrogène **D,** au moins un accepteur de liaisons hydrogène **A** pour pouvoir former des liaisons hydrogène entre dérivés organogélateurs et au moins un compatibilisant **C** comprenant un groupe choisi parmi:

- au moins une chaîne hydrocarbonée linéaire comprenant au moins 4 atomes de carbone, ou
- au moins un cycle aliphatique de 3 à 8 atomes, ou
- au moins un cycle aromatique, ou
- au moins un système polycyclique condensé aliphatique, ou en partie aromatique ou encore entièrement aromatique, chaque cycle comprenant 5 ou 6 atomes,

De préférence, le donneur de liaisons hydrogène **D** comprend un hétéroatome porteur d'un atome d'hydrogène choisi parmi l'azote N, l'oxygène O et/ou le soufre S.

De préférence, l'accepteur de liaisons hydrogène **A** comprend un hétéroatome porteur de doublets électroniques choisi parmi l'oxygène O, le soufre S, l'azote N et/ou le phosphore P.

De préférence, le donneur **D** peut être choisi parmi les groupements alcool, thiol, phénol, amines primaires, amines secondaires, ammoniums quaternaires, amides, urées, hydrazides, acides carboxyliques, oximes, hydrazones, imines et leurs combinaisons.

De préférence, l'accepteur **A** peut être choisi parmi les groupements C=O, S=O, P=O ou N=O et les groupements hydrocarbonés linéaires ou cycliques contenant dans leur chaîne hydrocarbonée un hétéroatome d'oxygène O, de soufre S, d'azote N ou de phosphore P.

De préférence, l'accepteur **A** est choisi parmi les groupements alcools, phénols, amides, esters, urées, hydrazides, acides carboxyliques, cétones, aldéhydes, lactones, lactames, anhydrides, imides, sulfoxydes, sulfones, sulfonates, sulfates, sulfites, acides sulfoniques, sulfures, éthers, phosphines, phosphites, phosphonates, phosphates, nitrates ou nitrites et leurs combinaisons.

De préférence, les trois motifs **A**, **D** et **C** sont présents dans chaque dérivé organogélateur pour qu'un gel puisse se former dans la phase bitume.

De préférence, lorsque le compatibilisant **C** est une chaîne hydrocarbonée linéaire comprenant au moins 4 atomes, cette chaîne hydrocarbonée linéaire comprend de 4 à 22 atomes de carbone, de préférence de 5 à 21, plus préférentiellement de 9 à 18, encore plus préférentiellement de 11 à 17. De préférence, cette chaîne hydrocarbonée linéaire est saturée et est choisie parmi les chaînes hydrocarbonées linéaires, saturées suivantes : $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$ OU $C_4H_8$, $C_5H_{10}$, $C_9H_{18}$, $C_{11}H_{22}$, $C_{12}H_{24}$, $C_{17}H_{34}$, $C_{18}H_{36}$, $C_{21}H_{42}$, $C_{22}H_{44}$.

De préférence, lorsque le compatibilisant **C** est un cycle aromatique, ce cycle aromatique est un noyau benzène ou un noyau benzène substitué.

Lorsque le noyau benzène est substitué, il est de préférence, substitué par au moins un hétéroatome, tel que l'oxygène, l'azote, le soufre, le fluor, le chlore, le brome et/ou l'iode et/ou par au moins un groupe choisi parmi les radicaux alkyles de 1 à 18 atomes, de préférence de 2 à 16 atomes de carbones, plus préférentiellement de 3 à 12 atomes de carbones, encore plus préférentiellement de 4 à 8 atomes de carbones. Ces substituants sont en position *para* ou *ortho,* de préférence en position *para.* De préférence, le nombre de substituants sur le noyau benzène est de 1 à 5, plus préférentiellement de 1 à 3, encore plus préférentiellement de 2 à 3.

De préférence, ce cycle aromatique est un noyau benzène substitué par au moins un groupe hydroxyle et/ou lesdits radicaux alkyles. De préférence le groupe hydroxyle est en position *para* et les radicaux alkyles en une ou des positions *ortho* par rapport au(x) groupe(s) hydroxyle(s).

Préférentiellement, le cycle aromatique est un groupe 3,5-dialkyl-4-hydroxyphényle et mieux encore un groupe 3,5-di-*tert*-butyl-4-hydroxyphényle.

Selon le premier mode de réalisation ne faisant pas partie de l'invention, le dérivé organogélateur a pour formule générale (**I**) suivante :

$$R_1\text{-}(NH)_nCONH\text{-}(X)_m\text{-}NHCO(NH)_n\text{-}R_2 \quad (\mathbf{I})$$

Dans laquelle:

- au moins un des groupes $R_1$, $R_2$ et/ou X constitue, indépendamment l'un de l'autre, le comptabilisant **C** tel que défini ci-dessus,
- n et m sont des entiers ayant indépendamment l'un de l'autre une valeur de 0 ou de 1.

Dans la formule générale (**I**), l'accepteur de liaisons hydrogène **A** est alors un atome d'oxygène d'un groupe amide (n = 0, m = 1), d'un groupe hydrazide (n = 0, m = 0), d'un groupe urée (n = 1, m = 1) ou d'un groupe NH-CO-NH-NH-CO-NH (n = 1, m = 0),

Dans la formule générale (**I**), le donneur de liaisons hydrogène **D** est alors un atome d'azote d'un groupe groupe amide (n = 0, m = 1), d'un groupe hydrazide (n = 0, m = 0), d'un groupe urée (n = 1, m = 1) ou d'un groupe NH-CO-NH-NH-CO-NH (n = 1, m = 0).

Dans une première variante ne faisant pas partie de l'invention, $R_1$ et/ou $R_2$ représente indépendamment l'un de l'autre le comptabilisant **C**, de préférence une chaîne hydrocarbonée linéaire d'au moins 4 atomes de carbone. Plus préférentiellement, $R_1$ et/ou $R_2$ représente indépendamment l'un de l'autre, une chaîne hydrocarbonée linéaire, comprenant de 4 à 22 atomes de carbone, de préférence de 5 à 21, plus préférentiellement de 9 à 18, encore plus préférentiellement de 11 à 17. Plus préférentiellement, la chaîne hydrocarbonée linéaire est saturée et est choisie parmi les chaînes hydrocarbonées linéaires, saturées suivantes : $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$.

De préférence, X peut aussi être un groupement cyclohexyl ou un groupement phenyl, les radicaux $R_1$-$(NH)_n$CONH- et NHCO$(NH)_n$-$R_2$- peuvent alors être en position *ortho*, *méta* ou *para.* Par ailleurs, ils peuvent être en position *cis* ou *trans* l'un par rapport à l'autre. De plus, lorsque le radical X est cyclique, ce cycle peut être substitué par d'autres groupements que les deux groupements principaux $R_1$-$(NH)_n$CONH- et -NHCO$(NH)_n$-$R_2$.

De préférence, X peut également comprendre deux ou plusieurs cycles aliphatiques et/ou aromatiques condensés ou non. Ainsi X est un groupement comportant deux cycles aliphatiques reliés par un groupement $CH_2$ éventuellement substitué comme par exemple:

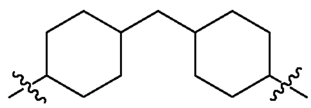

X peut aussi être un groupement comportant deux cycles aromatiques reliés par un groupement $CH_2$ éventuellement substitué comme par exemple:

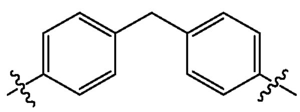

De préférence, les entiers m et n ont une valeur de 0. Dans ce cas particulier, la formule générale (**I**) s'écrit alors $R_1$-CONH-NHCO-$R_2$, $R_1$ et/ou $R_2$ étant tels que définis ci-dessus. Les organogélateurs préférés, sont alors les dérivés hydrazides répondant aux formules suivantes:

$C_5H_{11}$-CONH-NHCO-$C_5H_{11}$,

$C_9H_{19}$-CONH-NHCO-$C_9H_{19}$,

$C_{11}H_{23}$-CONH-NHCO-$C_{11}H_{23}$,

$C_{17}H_{35}$-CONH-NHCO-$C_{17}H_{35}$,

$C_{21}H_{43}$-CONH-NHCO-$C_{21}H_{43}$

Dans une seconde variante ne faisant pas partie de l'invention, $R_1$ et/ou $R_2$ représente également indépendamment l'un de l'autre un cycle aromatique.

Plus préférentiellement, $R_1$ et/ou $R_2$ représente indépendamment l'un de l'autre, un noyau benzène ou un noyau benzène substitué par au moins un hétéroatome, tel que l'oxygène, l'azote, le soufre, le fluor, le chlore, le brome, et/ou l'iode et/ou par au moins un groupe choisi parmi les radicaux alkyles comprenant de 1 à 18 atomes de carbone, de préférence de 2 à 16 atomes de carbone, plus préférentiellement de 3 à 12 atomes de carbone, encore plus préférentiellement de 4 à 8 atomes de carbone. De préférence, le nombre de substituants sur le noyau benzène est de 1 à 5, plus préférentiellement de 1 à 3, encore plus préférentiellement de 2 à 3.

De préférence, ce cycle aromatique est un noyau benzène substitué par au moins un groupe hydroxyle et/ou lesdits radicaux alkyles. De préférence, le groupe hydroxyle est en position *para* et les radicaux alkyles sont en une ou des positions *ortho* par rapport au(x) groupe(s) hydroxyle(s).

Préférentiellement, $R_1$ et/ou $R_2$ représente indépendamment l'un de l'autre des groupes 3,5-dialkyl-4-hydroxyphényle et mieux encore des groupes 3,5-di-*tert*-butyl-4-hydroxyphényle.

Le dérivé hydrazide de formule générale **(I)** est par exemple :

le 2',3-bis[[3-[3,5-di-tert-butyl-4-hydroxyphenyl]propionyl]]propionohydrazide,
le N,N'-hexane-1,6-diylbis(3-(3,5-di-tert-butyl-4-hydroxyphenylpropionamide)),
le 1,6-hexamethylène-bis(3-(3,5-di-tert-butyl-4-hydroxyphenyl)propionate.

Le dérivé hydrazide préféré de formule générale **(I)** est :

le 2',3-bis[[3-[3,5-di-tert-butyl-4-hydroxyphenyl]propionyl]]propionohydrazide.

Dans une troisième variante ne faisant pas partie de l'invention, l'entier n a une valeur de 0 et m une valeur de 1. Dans ce cas particulier, la formule générale **(I)** s'écrit alors $R_1$-CONH-X-NHCO-$R_2$, $R_1$, $R_2$ et/ou X étant tels que définis ci-dessus.

Il s'agit alors de dérivés diamides, parmi lesquelles la diamide N, N'-éthylène bis(stéaramide) $C_{17}H_{35}$-CONH-$CH_2$-$CH_2$-NHCO-$C_{17}H_{35}$ est exclue.

Dans une quatrième variante ne faisant pas partie de l'invention, les entiers n et m ont une valeur de 1. Dans ce cas particulier, la formule générale **(I)** s'écrit alors $R_1$-NHCONH-X-NHCONH-$R_2$, $R_1$, $R_2$ et/ou X étant tels que définis ci-dessus.

Il s'agit alors de dérivés uréides, dont une urée particulière la 4,4'-bis(dodécylaminocarbonylamino)diphénylméthane a pour formule: $C_{12}H_{25}$-NHCONH-$C_6H_4$-$CH_2$-$C_6H_4$-NHCONH-$C_{12}H_{25}$.

Selon le second mode de réalisation ne faisant pas partie de l'invention, le dérivé organogélateur a pour formule générale **(II)** suivante :

$$(R_3\text{-NH-CO})_x\text{-Z-}(\text{NH-CO-}R_4)_y \qquad \textbf{(II)}$$

Dans laquelle:

- au moins un des groupes $R_3$, $R_4$ et/ou Z constitue, indépendamment l'un de l'autre, le compatibilisant **C** tel que défini ci-dessus,
- x et y sont des entiers différents de valeur variant de 0 à 3 et tels que x+y=3.

De préférence :

- $R_3$ et/ou $R_4$ représente indépendamment l'un de l'autre, une chaîne hydrocarbonée saturée ou insaturée, linéaire, ramifiée ou cyclique comprenant de 1 à 22 atomes de carbone, éventuellement substituée, et comprenant éventuellement des hétéroatomes, des cycles et/ou des hétérocycles ;
- Z constitue le comptabilisant **C** et représente un cycle aromatique choisi parmi les groupements suivants :

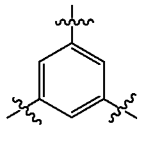
**$Z_1$**

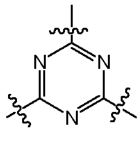
**$Z_2$**

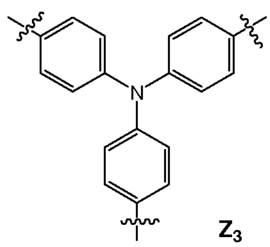
**$Z_3$**

- x et y sont des entiers différents de valeur variant de 0 à 3 et tels que x+y=3.

De préférence, x est égal à 0, y est égal à 3, $R_4$ représente une chaîne hydrocarbonée saturée, linéaire, de 1 à 22 atomes de carbone, de préférence de 2 à 18 atomes de carbone, de préférence de 5 à 12 atomes de carbone et Z représente $Z_2$.

De préférence, x est égal à 0, y est égal à 3, $R_4$ représente le groupe $C_9H_{19}$ et Z représente $Z_2$, la N2, N4, N6-tridécylmélamine ayant la formule suivante:

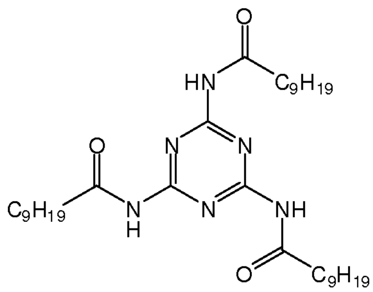

De préférence, x est égal à 3, y est égal à 0, Z représente $Z_1$ et $R_3$ est choisi parmi les groupes suivants pris seuls ou mélanges :

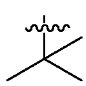 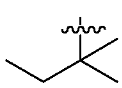 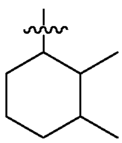 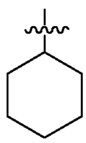 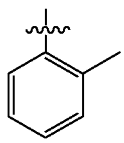

De préférence, x est égal à 3, y est égal à 0, Z représente $Z_1$ et $R_3$ représente une chaîne hydrocarbonée saturée, linéaire, de 1 à 22 atomes de carbone, de préférence de 8 à 12 atomes de carbone.

Le donneur de liaisons hydrogène **D** représente alors un atome d'azote d'un groupe amide.

L'accepteur de liaisons hydrogène **A** représente alors un atome d'oxygène d'un groupe amide.

Selon le troixième mode de réalisation ne faisant pas partie de l'invention, le dérivé organogélateur est un dérivé du sorbitol et a pour formule générale (**III**) suivante :

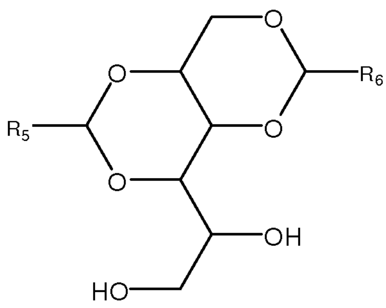

**(III)**

Dans laquelle $R_5$ et/ou $R_6$ représente indépendamment l'un de l'autre, le compatibilisant **C** tel que défini ci-dessus.

Le donneur de liaisons hydrogène **D** représente alors un atome d'oxygène d'un groupe alcool OH.

L'accepteur de liaisons hydrogène **A** représente alors un atome d'oxygène.

De préférence, $R_5$ et/ou $R_6$ représente indépendamment l'un de l'autre, un cycle aromatique.

Plus préférentiellement, $R_5$ et/ou $R_6$ représente indépendamment l'un de l'autre, un noyau benzène ou un noyau benzène substitué par au moins un hétéroatome, tel que l'oxygène, l'azote, le soufre, le fluor, le chlore, le brome et/ou l'iode et/ou par au moins un groupe choisi parmi les radicaux alkyles de 1 à 18 atomes, de préférence de 2 à 16 atomes de carbones, plus préférentiellement de 3 à 12 atomes de carbones, encore plus préférentiellement de 4 à 8 atomes de carbones. Ces substituants sont en position *para* ou *ortho,* de préférence en position *para.* De préférence, le nombre de substituants sur le noyau benzène est de 1 à 5, plus préférentiellement de 1 à 3, encore plus préférentiellement de 2 à 3

De préférence, les groupes $R_5$ et/ou $R_6$ représente indépendamment l'un de l'autre, un noyau aromatique non substitué, le dérivé de formule générale (**III**) est alors le 1,3:2,4-di-O-benzylidène-D-sorbitol ou DBS.

De préférence, les groupes $R_5$ et/ou $R_6$ représente indépendamment l'un de l'autre, un noyau aromatique substitué par un atome de chlore ou de brome en position para. Les dérivés de formule générale (**III**) sont alors :

le 1,3:2,4-bis(*p*-chlorobenzylidène) sorbitol ou,
le 1,3:2,4-bis(*p*-bromobenzylidène) sorbitol.

D'autres dérivés de formule générale (**III**) sont par exemple les dérivés suivants :

1,3:2,4-bis(*p*-méthylbenzylidène) sorbitol,
1,3:2,4-bis(3,4-diméthylbenzylidène) sorbitol,
1,3:2,4-bis(*p*-éthylbenzylidène) sorbitol,
1,3:2,4-bis(*p*-propylbenzylidène) sorbitol,
1,3:2,4-bis(*p*-butylbenzylidène) sorbitol,
1,3:2,4-bis(*p*-éthoxylbenzylidène) sorbitol.

Par dérivé du sorbitol, on entend tout produit de réaction, obtenu à partir du sorbitol. En particulier, tout produit de réaction, obtenu en faisant réagir un aldéhyde avec du sorbitol. On obtient par cette réaction de condensation, des acétals de sorbitol, qui sont les dérivés du sorbitol préférés. En particulier, en faisant réagir 1 mole de sorbitol et 2 moles d'aldéhyde, on obtient des diacétals de sorbitol de formule générale **(III)**. Les diacétals de sorbitol de formule générale **(III)** peuvent aussi contenir une certaine quantité de monoacétals de sorbitol et de triacétals de sorbitol. Par exemple quand, il s'agit du 1,3:2,4-di-O-benzylidène-D-sorbitol, il peut contenir aussi du 2,4-mono-O-benzylidène-D-sorbitol (MBS) et du 1,3:2,4:5,6-tri-O-benzylidène-D-sorbitol (TBS).

De même à la place du sorbitol, on pourrait envisager d'utiliser tout autre polyalcool comme par exemple, le xylitol, le mannitol et/ou le ribitol, pour obtenir des diacétals de xylitol, mannitol et/ou ribitol.

Selon l'invention, le dérivé organogélateur a pour formule générale **(IV)** suivante :

$$R_7\text{-}(COOH)_z \qquad \textbf{(IV)}$$

Dans laquelle :

- $R_7$ représente le compatibilisant **C** étant une chaîne hydrocarbonée linéaire comprenant au moins 4 atomes de carbone tel que défini ci-dessus,
- z est un entier égal à 2.

Le donneur de liaisons hydrogène **D** représente alors un atome d'oxygène d'un groupe acide COOH.

L'accepteur de liaisons hydrogène **A** représente alors un atome d'oxygène d'un groupe acide COOH.

De préférence, $R_7$ représente une chaîne hydrocarbonée linéaire comprenant une chaîne hydrocarbonée linéaire comprenant de 4 à 22 atomes de carbone, de préférence de 5 à 21 atomes de carbone, plus préférentiellement de 9 à 18 atomes de carbone, encore plus préférentiellement de 11 à 17 atomes de carbone. De préférence, cette chaîne hydrocarbonée linéaire est saturée.

Il est décrit que les dérivés organogélateurs répondant à la formule **(IV)** peuvent être des diacides quand z = 2, des triacides quand z = 3 ou des tétra acides quand z = 4.

Les dérivés organogélateurs, selon l'invention, sont des diacides avec z = 2 de formule générale HOOC-$R_7$-COOH, $R_7$ étant le compatibilisant **C** tel que défini ci-dessus. De préférence, le groupement $R_7$ est une chaîne linéaire saturée de formule $C_wH_{2w}$ avec w un entier variant de 4 à 22, de préférence de 5 à 21, plus préférentiellement de 9 à 18, encore plus préférentiellement de 11 à 17.

Les diacides préférés sont les suivants :

- l'acide adipique ou acide 1,6-hexanedioïque avec w = 4,
- l'acide pimélique ou acide 1,7-heptanedioïque avec w = 5,
- l'acide subérique ou acide 1,8-octanedioïque avec w = 6,
- l'acide azélaique ou acide 1,9-nonanedioïque avec w = 7,
- l'acide sébacique ou acide 1,10-decanedioïque avec w = 8,
- l'acide undécanedioïque avec w = 9,
- l'acide 1,2-dodécanedioïque avec w = 10,
- l'acide tétradécanedioïque avec w = 12.

Les diacides peuvent aussi être des dimères diacide d'acide(s) gras insaturé(s) c'est-à-dire des dimères formés à partir d'au moins un acide gras insaturé, par exemple à partir d'un seul acide gras insaturé ou à partir de deux acides gras insaturés différents. Les dimères diacide d'acide(s) gras insaturé(s) sont classiquement obtenus par réaction de dimérisation intermoléculaire d'au moins un acide gras insaturé (réaction de Diels Alder par exemple). De préférence, on dimérise un seul type d'acide gras insaturé. Ils dérivent en particulier de la dimérisation d'un acide gras insaturé notamment en $C_8$ à $C_{34}$, notamment en $C_{12}$ à $C_{22}$, en particulier en $C_{16}$ à $C_{20}$, et plus particulièrement en $C_{18}$. Un dimère d'acide gras préféré est obtenu par dimérisation de l'acide linoléïque, celui-ci pouvant ensuite être partiellement ou totalement hydrogéné. Un autre dimère d'acide gras préféré a pour formule $HOOC-(CH_2)_7-CH=CH-(CH_2)_7-COOH$. Un autre dimère d'acide gras préféré est obtenu par dimérisation du linoléate de méthyle. De la même façon, on peut trouver des triacides d'acides gras et des tétracides d'acides gras, obtenus respectivement par trimérisation et tétramérisation d'au moins un acide gras.

D'autres dérivés organogélateurs décrits dans la présente demande et ne faisant pas partie de l'invention ont pour formule générale (V) suivante :

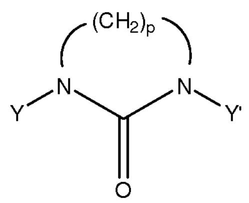

Dans laquelle, Y et/ou Y' représente indépendamment l'un de l'autre, un atome d'hydrogène ou groupe choisi parmi les groupes suivants : $-(CH_2)_q-CH_3$, $-(CH_2)_q-NH_2$, $-(CH_2)_q-OH$, $-(CH_2)_q-COOH$ ou

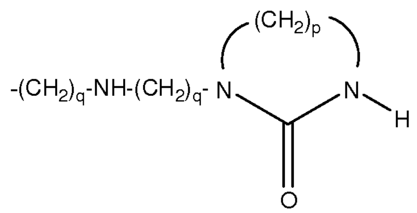

avec q un entier variant de 2 à 18, de préférence de 2 à 10, de préférence de 2 à 4 et p un entier supérieur ou égal à 2, de préférence ayant une valeur de 2 ou 3, de préférence étant entendu que Y et Y' ne peuvent être simultanément le groupe - $(CH_2)_q-CH_3$. On préfère les groupes H, $-(CH_2)_q-NH_2$, $-(CH_2)_q-OH$, $-(CH_2)_q-COOH$, ou

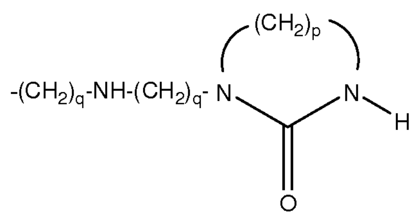

Le compatibilisant C représente alors un cycle aliphatique de 3 à 8 atomes de carbone.

Le donneur de liaisons hydrogène **D** représente alors un atome d'azote d'un groupe urée -NH-CO-NH-, d'un groupe urée -NH-CO-N-, d'un groupe amine $-NH_2$ ou d'un groupe amine -NH- ou un atome d'oxygène d'un groupe -OH ou d'un groupe acide COOH.

L'accepteur de liaisons hydrogène **A** représente alors un atome d'oxygène d'un groupe urée -NH-CO-NH-, d'un groupe urée -N-CO-NH-, d'un groupe urée -N-CO-N- ou d'un groupe acide COOH.

Parmi les dérivés organogélateurs préférés répondant à la formule (**V**), on peut citer les composés suivants :

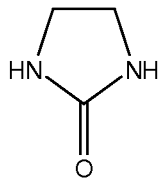
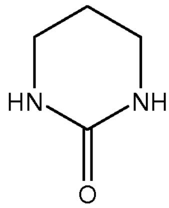
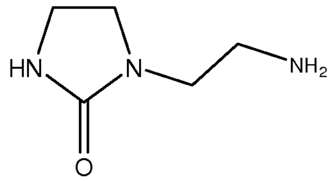

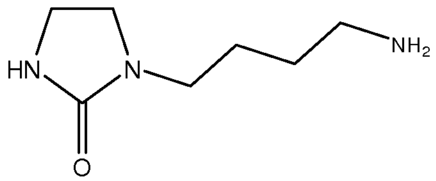
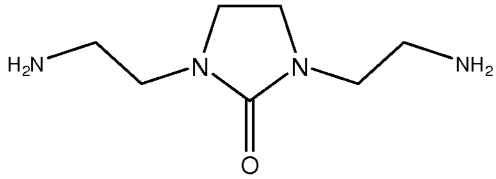

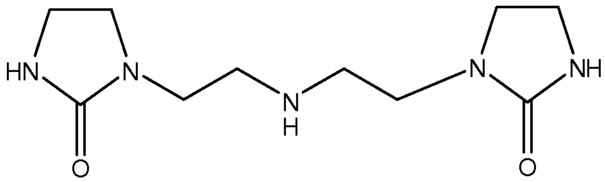

D'autres dérivés décrits dans la présente demande et ne faisant pas partie de l'invention ont pour formule générale (**VI**) suivante :

$$R_8\text{-NH-CO-CO-NH-}R_9 \qquad (\textbf{VI})$$

Dans laquelle $R_8$ et/ou $R_9$ représente indépendamment l'un de l'autre le compatibilisant **C** tel que défini ci-dessus.

De préférence $R_8$ et/ou $R_9$ représente indépendamment l'un de l'autre, une chaîne hydrocarbonée linéaire d'au moins 4 atomes de carbone. Plus préférentiellement, $R_8$ et/ou $R_9$ représente indépendamment l'un de l'autre, une chaîne hydrocarbonée linéaire, comprenant de 4 à 22 atomes de carbone, de préférence de 5 à 21, plus préférentiellement de 9 à 18, encore plus préférentiellement de 11 à 17. Plus préférentiellement, la chaîne hydrocarbonée linéaire est saturée et est choisie parmi les chaînes hydrocarbonées linéaires, saturées suivantes : $C_4H_9$, $C_5H_{11}$, $C_9H_{19}$, $C_{11}H_{23}$, $C_{12}H_{25}$, $C_{17}H_{35}$, $C_{18}H_{37}$, $C_{21}H_{43}$, $C_{22}H_{45}$.

Dans la formule générale (**VI**), l'accepteur de liaisons hydrogène **A** est alors un atome d'oxygène d'un groupe -NH-CO-CO-NH-.

Dans la formule générale (**VI**), le donneur de liaisons hydrogène **D** est alors un atome d'azote d'un groupe -NH-CO-CO-NH-.

Selon l'invention le dérivé organogélateur peut également contenir des dérivés organogélateurs n'ayant pas tous la même structure chimique. Ainsi selon l'invention, le dérivé organogélateur (**VII**) peut contenir au moins deux types de dérivés organogélateurs ayant une structure chimique différente. Lorsqu'il y a deux types de dérivés organogélateurs, les trois motifs **A**, **D** et **C** se retrouvent en globalité dans le dérivé organogélateur constitué de dérivés organogélateurs de structure chimique différente, mais répartis différemment sur ces deux types de dérivés organogélateurs. Ainsi si on considère un type $T_1$ de dérivés organogélateurs et un deuxième type $T_2$, $T_1$ peut contenir les motifs **A** et **C** et $T_2$ contenir le motif **D.** On peut également avoir la combinaison **D** + **C** dans un premier type $T_1$ de dérivés organogélateurs et **A** dans un deuxième type $T_2$ de dérivés organogélateurs. On peut aussi envisager un premier type $T_1$ ayant les trois motifs **A**, **D**, **C** et un deuxième type $T_2$ ayant aussi les trois motifs **A**, **C**, **D** mais basé sur une structure chimique différente. Les trois motifs n'étant pas de même nature chimique ou pas répartis de la même façon sur $T_1$ et $T_2$.

Parmi ces dérivés organogélateurs (**VII**) comprenant deux types de dérivés organogélateurs, on peut citer les combinaisons des dérivés choisis parmi les dérivés d'amine, les dérivés d'aminopyrimidine ou les dérivés du phénol associés à des molécules choisies parmi les dérivés d'acide carboxylique, les dérivés d'acide barbiturique ou les dérivés de sulfosuccinate.

De préférence on peut citer les combinaisons :

- des dérivés d'amine associés à des dérivés d'acide carboxylique,
- des dérivés d'aminopyrimidine associés à des dérivés d'acide barbiturique,
- des dérivés du phénol associé à des dérivés de sulfosuccinate.

Parmi ces combinaisons on peut citer notamment l'association du 5-octyl-2, 4, 6-triaminopyrimidine et du 5,5-dioctylbarbituric acide ou l'association du 5-octyl-2, 4, 6-triaminopyrimidine et de l'acide barbiturique.

On peut aussi citer les associations du 2-naphtol ou acide tannique ou lauryl gallate avec les sels de sodium du dioctyl sulfocuccinate ou du dihexyl sulfosuccinate.

On ne sortira pas du cadre de l'invention en combinant le dérivé organogélateur de formule (**IV**) avec plusieurs dérivés organogélateurs tels que ceux précédemment cités et notamment les dérivés organogélateurs des formules (**I**), (**II**), (**III**), (**V**), (**VI**) et (**VII**).

Le dérivé organogélateur a une masse molaire inférieure ou égale à 2000 $gmol^{-1}$ et de préférence inférieure ou égale à 1000 $gmol^{-1}$.

On utilise de 0,1 à 20% en masse de dérivé organogélateur, dans la composition bitumineuse. De préférence de 0,2 à 15%, plus préférentiellement de 0,5 à 10%, encore plus préférentiellement de 1 à 5%, encore plus préférentiellement de 2 à 4%. Le dérivé organogélateur est efficace et ce à de très faibles concentrations, on travaille donc de préférence autour de 0,5% en masse de dérivé organogélateur, dans la composition bitumineuse, par exemple à des concentrations en masse de 0,4%, 0,5%, 0,6% ou 0,7%.

Le bitume utilisé peut être un bitume issu de différentes origines. Le bitume utilisable selon l'invention peut être choisi parmi les bitumes d'origine naturelle, comme ceux contenus dans des gisements de bitume naturel, d'asphalte naturel ou les sables bitumineux. Le bitume utilisable selon l'invention peut aussi être un bitume ou un mélange de bitumes provenant du raffinage du pétrole brut tels que des bitumes de distillation directe ou des bitumes de distillation sous pression réduite ou encore des bitumes soufflés ou semi-soufflés, des résidus de désasphaltage au propane ou au pentane, des résidus de viscoréduction, ces différentes coupes pouvant être prises seules ou en mélange. Les bitumes utilisés peuvent également être des bitumes fluxés par addition de solvants volatils, de fluxants d'origine pétrolière, de fluxants carbochimiques et/ou de fluxants d'origine végétale. On peut aussi utiliser des bitumes synthétiques également appelés bitumes clairs, pigmentables ou colorables, c'est-à-dire des mélanges d'huile et de résine, ladites huile et/ou résine étant d'origine pétrolière et/ou végétale. Le bitume peut être un bitume d'origine naphténique ou paraffinique, ou un mélange de ces deux bitumes.

La composition bitumineuse peut aussi comprendre au moins un polymère. Les polymères utilisables selon l'invention sont les polymères classiquement utilisables dans le domaine des bitumes comme par exemple les polybutadiènes, les polyisoprènes, les caoutchoucs butyle, les polyacrylates, les polymétacrylates, les polychloroprènes, les polynorbornènes, les polybutènes, les polyisobutènes, les polyéthylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment terpolymère éthylène/acrylate de méthyle/méthacrylate de glycidyle et terpolymères éthylène /acrylate ou méthacrylate d'alkyle/anhydride maléique et notamment terpolymère éthylène/acrylate de butyle/anhydride maléique.

Les polymères préférés sont les copolymères à base de motifs diène conjugué et de motifs hydrocarbure monovinyl aromatique, qui peuvent notamment être réticulés.

Le diène conjugué sera de préférence choisi parmi ceux comportant de 4 à 8 atomes de carbone, tel que le 1-3 butadiène (butadiène), le 2-méthyl-1,3-butadiène (isoprène), le 2,3-diméthyl-1,3-butadiène, le 1,3-pentadiène, le 1,2-hexadiène, le chloroprène, le butadiène carboxylé et/ou l'isoprène carboxylé. De préférence, le diène conjugué est le butadiène.

L'hydrocarbure monovinyl aromatique sera de préférence choisi parmi le styrène, l'o-méthyl styrène, le p-méthyl styrène, le p-tert-butylstyrène, le 2,3 diméthyl- styrène, l'a-méthyl styrène, le vinyl naphtalène, le vinyl toluène et/ou le vinyl xylène. De préférence, l'hydrocarbure monovinyl est le styrène.

Plus particulièrement, le copolymère consiste en un ou plusieurs copolymères choisis parmi les copolymères d'hydrocarbure monovinyl aromatique et de diène conjugué, en particulier de styrène et de butadiène. Ces copolymères d'hydrocarbure monovinyl aromatique et de diène conjugué, en particulier de styrène et de butadiène, peuvent être linéaires ou étoilés. Ils peuvent être sous forme de dibloc, de tribloc et/ou être multibranchés. Ces copolymères d'hydrocarbure monovinyl aromatique et de diène conjugué, en particulier de styrène et de butadiène, comprennent éventuellement une charnière statistique.

De préférence le copolymère est un copolymère dibloc d'hydrocarbure monovinyl aromatique et de diène conjugué, en particulier un copolymère dibloc de styrène et de butadiène, en particulier un copolymère dibloc de styrène et de butadiène ayant une charnière statistique.

Le copolymère d'hydrocarbure monovinyl aromatique et de diène conjugué, en particulier de styrène et de butadiène, a une masse moléculaire moyenne $M_W$ comprise entre 4 000 et 500 000 daltons, de préférence entre 10 000 et 200 000, plus préférentiellement entre 50 000 et 150 000, encore plus préférentiellement entre 80 000 et 130 000, encore plus préférentiellement entre 100 000 et 120 000. La masse moléculaire du copolymère est mesurée par

chromatographie GPC avec un étalon polystyrène selon la norme ASTM D3536, remplacée par la norme ASTM D5296-05.

Le copolymère d'hydrocarbure monovinyl aromatique et de diène conjugué, en particulier de styrène et de butadiène, possède avantageusement une teneur pondérale en hydrocarbure monovinyl aromatique, en particulier en styrène allant de 5% à 50% en masse, par rapport à la masse de copolymère, de préférence de 20% à 40%.

Le copolymère d'hydrocarbure monovinyl aromatique et de diène conjugué, en particulier de styrène et de butadiène, possède avantageusement une teneur pondérale en diène conjugué, en particulier en butadiène, allant de 50% à 95% en masse, par rapport à la masse de copolymère, de préférence de 60% à 80%.

Parmi les motifs diène conjugué, on distingue les motifs à doubles liaisons 1-4 issus du diène conjugué et les motifs à doubles liaisons 1-2 issus du diène conjugué. Par motifs à doubles liaisons 1-4 issus du diène conjugué, on entend les motifs obtenus via une addition 1,4 lors de la polymérisation du diène conjugué. Par motifs à doubles liaisons 1-2 issus du diène conjugué, on entend les motifs obtenus via une addition 1,2 lors de la polymérisation du diène conjugué. Le résultat de cette addition 1,2 est une double liaison vinylique dite « pendante ».

Le copolymère d'hydrocarbure monovinyl aromatique et de diène conjugué, en particulier de styrène et de butadiène, possède une teneur en motifs à doubles liaisons 1-2 issus du diène conjugué, en particulier issus du butadiène, comprise entre 5% et 50% en masse, par rapport à la masse totale des motifs diène conjugué, en particulier butadiène, de préférence entre 10% et 40%, plus préférentiellement entre 15% et 30%, encore plus préférentiellement entre 20% et 25%, encore plus préférentiellement entre 18% et 23%. Le copolymère d'hydrocarbure monovinyl aromatique et de diène conjugué, en particulier de styrène et de butadiène, possédant une teneur en motifs à doubles liaisons 1-2 issus du diène conjugué, en particulier issus du butadiène telle que défini ci-dessus pourra être utilisé avec ou sans agent réticulant, car il a la propriété d'être « auto-réticulant », les branches de copolymère sont réticulées, liées entre elles via ces doubles liaisons vinyliques dite « pendantes », sans forcément devoir recourir à l'emploi d'un agent réticulant.

La composition bitumineuse comprend de 1% à 20% en masse de polymère, en particulier de copolymère d'hydrocarbure monovinyl aromatique et de diène conjugué, en particulier de copolymère de styrène et de butadiène, par rapport à la masse de la composition bitumineuse, de préférence de 2% à 10%, encore plus préférentiellement de 3% à 5%.

La réticulation du polymère, en particulier du copolymère d'hydrocarbure monovinyl aromatique et de diène conjugué, en particulier du copolymère de styrène et de butadiène, dans la composition bitumineuse, est réalisée grâce à l'utilisation d'un polymère, en particulier d'un copolymère d'hydrocarbure monovinyl aromatique et de diène conjugué, en particulier d'un copolymère de styrène et de butadiène, tel que défini ci-dessus et d'un agent réticulant, ou grâce à l'utilisation d'un polymère, en particulier d'un copolymère d'hydrocarbure monovinyl aromatique et de diène conjugué, en particulier d'un copolymère de styrène et de butadiène ayant une quantité particulière de motifs à doubles liaisons 1-2 issus du diène conjugué, en particulier de butadiène, cette quantité de motifs à doubles liaisons 1-2 issus du diène conjugué, en particulier du butadiène, étant comprise entre 5% et 50% en masse, par rapport à la masse totale des motifs diène conjugué, en particulier butadiène, de préférence entre 10% et 40%, plus préférentiellement entre 15% et 30%, encore plus préférentiellement entre 20% et 25%, encore plus préférentiellement entre 18% et 23%, ou bien encore grâce à l'utilisation dudit polymère, en particulier du copolymère d'hydrocarbure monovinyl aromatique et de diène conjugué, en particulier du copolymère de styrène et de butadiène, ayant la quantité particulière de motifs à doubles liaisons 1-2 issus du diène conjugué, en particulier du butadiène, en combinaison avec un agent réticulant.

De préférence, l'agent réticulant est choisi parmi le soufre et les polysulfures d'hydrocarbyle, pris seuls ou en mélange, en présence éventuelle d'accélérateurs de vulcanisation donneurs de soufre ou non donneurs de soufre, pris seuls ou en mélange.

Le soufre est notamment du soufre en fleur ou encore du soufre cristallisé alpha.

Les polysulfures d'hydrocarbyle sont par exemple, choisis parmi les disulfures de dihexyle, les disulfures de dioctyle, les disulfures de didodécyle, les disulfures de ditertiododécyle, les disulfures de dihexadécyle, les trisulfures de dihexyle, les trisulfures de dioctyle, les trisulfures de dinonyle, les trisulfures de ditertiododécyle, les trisulfures de dihexadécyle, les trisulfures de diphényle, les trisulfures de dibenzyle, les tétrasulfures de dihexyle, les tétrasulfures de dioctyle, les tétrasulfures de dinonyle, les tétrasulfures de ditertiododécyle, les tétrasulfures de dihexadécyle, les tétrasulfures de diphényle, les tétrasulfures d'orthotolyle, les tétrasulfures de dibenzyle, les pentasulfures de dihexyle, les pentasulfures de dioctyle, les pentasulfures de dinonyle, les pentasulfures de ditertiododécyle, les pentasulfures de dihexadécyle, les pentasulfures de dibenzyle, les pentasulfures de diallyle.

Les accélérateurs de vulcanisation donneurs de soufre, peuvent être choisis parmi les polysulfures de thiurame, comme par exemple, les disulfures de tétrabutylthiurame, les disulfures de tétraéthylthiurame et les disulfures de tétraméthylthiurame, les disulfures de dipentaméthylènethiurame, les tétrasulfures de dipentaméthylènethiurame ou les hexasulfures de dipentaméthylènethiurame.

Les accélérateurs de vulcanisation non donneurs de soufre utilisables selon l'invention peuvent être choisis notamment parmi le mercaptobenzothiazole et ses dérivés, les dithiocarbamates et ses dérivés, et les monosulfures de thiurame et ses dérivés, pris seuls ou en mélange. On peut citer comme exemples d'accélérateurs de vulcanisation non

donneurs de soufre, le 2-mercaptobenzothiazole de zinc, le benzothiazolethiolate de zinc, le benzothiazolethiolate de sodium, le disulfure de benzothiazyle, le benzothiazolethiolate de cuivre, le N, N'-diéthylthiocarbamylesulfure de benzothiazyle et les benzothiazolesulfénamides comme le 2-benzothiazolediéthylsulfénamide, le 2-benzothiazolepentaméthylènesulfénamide, le 2-benzothiazolecyclohexylsulfénamide, le N-oxydiéthylène 2-benzothiazolesulfénamide, le N-oxydiéthylène 2-benzothiazolethiosulfénamide, le 2-benzothiazoledicyclohexylsulfénamide, le 2-benzothiazolediisopropylsulfénamide, le 2-benzothiazoletertiobutylsulfénamide, le diméthyldithiocarbamate de bismuth, le diamyldithiocarbamate de cadmium, le diéthyldithiocarbamate de cadmium, le diméthyldithiocarbamate de cuivre, le diamyldithiocarbamate de plomb, le diméthyldithiocarbamate de plomb, le pentaméthylènedithiocarbamate de plomb, le diméthyldithiocarbamate de sélénium, le diéthyldithiocarbamate de tellure, le diamyldithiocarbamate de zinc, le dibenzyldithiocarbamate de zinc, le diéthyldithiocarbamate de zinc, le diméthyldithiocarbamate de zinc, le dibutyldithiocarbamate de zinc, le pentaméthylènedithiocarbamate de zinc, le monosulfure de dipentaméthylènethiurame, le monosulfure de tétrabutylthiurame, le monosulfure de tétraéthylthiurame et le monosulfure de tétraméthylthiurame.

L'agent réticulant peut aussi être choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, tels que l'oxygène. Parmi les composés répondant à cette formule générale, on peut citer par exemple, le 1,2 éthanedithiol, le 1,3 propanedithiol, le 1,4 butanedithiol, le 1,5 pentanedithiol, le 1,6 hexanedithiol, le 1,7 heptanedithiol, le 1,8 octanedithiol, le bis-(2-mercaptoéthyl)éther, le bis-(3-mercaptoéthyl)éther, le bis-(4-mercaptoéthyl)éther, le (2-mercaptoéthyl) (3-mercaptobutyl)éther, le (2-mercaptoéthyl) (4-mercaptobutyl)éther, le 1,8-dimercapto-3,6-dioxaoctane, le benzène-1,2-dithiol, le benzène-1,3-dithiol, le benzène-1,4-dithiol ou le toluène-3,4-dithiol, le biphenyl-4,4'-dithiol.

On utilise en général une quantité d'agent réticulant entre 0,05% et 5% en masse, par rapport à la masse de la composition bitumineuse, de préférence entre 0,1% et 2%, plus préférentiellement entre 0,2% et 1%, encore plus préférentiellement entre 0,3% et 0,5%.

De préférence, les quantités de polymère et d'agent réticulant sont fixées de manière à obtenir un ratio polymère/agent réticulant (ou copolymère de styrène et de butadiène/agent réticulant) compris entre 50 :1 et 150 :1, de préférence entre 60 :1 et 100 :1, plus préférentiellement entre 70 :1 et 80 :1.

La réticulation des compositions bitumineuses peut être mise en évidence en effectuant sur ces compositions bitumineuses, des tests de traction selon la norme NF EN 13587. Les compositions bitumineuses réticulées, ont une résistance à la traction plus élevée que les compositions bitumineuses non réticulées. Une résistance à la traction plus élevée se traduit par un allongement à la rupture ou élongation maximale (ε max en %) élevée, une contrainte à la rupture ou contrainte à l'élongation maximale (σ ε max en MPa) élevée, une énergie conventionnelle à 400% (E 400% en $J/cm^2$) élevée et/ou une énergie totale (E totale en J) élevée.

Les compositions bitumineuses, en particulier les compositions bitume/polymère réticulées, ont une élongation maximale, selon la norme NF EN 13587, supérieure ou égale à 400%, de préférence supérieure ou égale à 500%, plus préférentiellement supérieure ou égale à 600%, encore plus préférentiellement supérieure ou égale à 700%.

Les compositions bitumineuses, en particulier les compositions bitume/polymère réticulées, ont une contrainte à l'élongation maximale, selon la norme NF EN 13587, supérieure ou égale à 0,4 MPa, de préférence supérieure ou égale à 0,6 MPa, plus préférentiellement supérieure ou égale à 0,8 MPa, encore plus préférentiellement supérieure ou égale à 1,2 MPa.

Les compositions bitumineuses, en particulier les compositions bitume/polymère réticulées, ont une énergie conventionnelle à 400%, selon la norme NF EN 13587, supérieure ou égale à 3 $J/cm^2$, de préférence supérieure ou égale à 5 $J/cm^2$, plus préférentiellement supérieure ou égale à 10 $J/cm^2$, encore plus préférentiellement supérieure ou égale à 15 $J/cm^2$.

Les compositions bitumineuses, en particulier les compositions bitume/polymère réticulées, ont une énergie totale, selon la norme NF EN 13587, supérieure ou égale à 1 J, de préférence supérieure ou égale à 2 J, plus préférentiellement supérieure ou égale à 4 J, encore plus préférentiellement supérieure ou égale à 5 J.

La composition bitumineuse peut aussi éventuellement comprendre des dopes d'adhésivité et/ou des agents tensioactifs. Ils sont choisis parmi les dérivés d'alkylamines, les dérivés d'alkyl-polyamines, les dérivés d'alkylamidopolyamines, les dérivés d'alkyl amidopolyamines et les dérivés de sels d'ammonium quaternaire, pris seuls ou en mélange. Les plus utilisés sont les propylènes-diamines de suif, les amido-amines de suif, les ammoniums quaternaires obtenus par quaternisation des propylènes-diamines de suif, les propylènes-polyamines de suif. La quantité de dopes d'adhésivité et/ou des agents tensioactifs dans la composition bitumineuse est comprise entre 0,1% et 2% en masse, par rapport à la masse de la composition bitumineuse, de préférence entre 0,2% et 1%.

La composition bitumineuse peut aussi éventuellement comprendre au moins une huile choisie parmi les huiles d'origine pétrolière, d'origine végétale et/ou d'origine animale.

La composition bitumineuse est préparée par mélange du dérivé organogélateur à la composition bitumineuse à une température de 100°C à 220°C, de préférence de 120°C à 200°C, plus préférentiellement de 140°C à 180°C, encore plus préférentiellement entre 160°C et 170°C, pendant une durée de 30 minutes à 48 heures, de préférence de

1 heure à 24 heures, plus préférentiellement de 2 heures à 16 heures, encore plus préférentiellement de 4 heures à 8 heures. Les différents additifs supplémentaires décrits ci-dessus tels que les polymères ou les huiles pourront être ajoutés avant ou après le dérivé organogélateur dans les mêmes conditions de température et de durée.

Lorsqu'il s'agit de préparer une composition bitume/polymère réticulée, on prépare tout d'abord la composition bitume/polymère réticulée sans le dérivé organogélateur, en mélangeant le bitume, le polymère, en particulier le copolymère d'hydrocarbure monovinyl aromatique et de diène conjugué, en particulier le copolymère de styrène et de butadiène, et éventuellement l'agent réticulant à une température de 100°C à 220°C, de préférence de 120°C à 200°C, plus préférentiellement de 140°C à 180°C, encore plus préférentiellement entre 160°C et 170°C, pendant une durée de 1 heure à 48 heures, de préférence de 4 heures à 24 heures, plus préférentiellement de 8 heures à 16 heures.

Lorsque la composition bitume/polymère est réticulée, on ajoute alors le dérivé organogélateur à la composition bitume/polymère réticulée à une température de 100°C à 220°C, de préférence de 120°C à 200°C, plus préférentiellement de 140°C à 180°C, encore plus préférentiellement entre 160°C et 170°C, pendant une durée de 30 minutes à 48 heures, de préférence de 1 heure à 24 heures, plus préférentiellement de 2 heures à 16 heures, encore plus préférentiellement de 4 heures à 8 heures.

Les compositions bitumineuses comprenant le dérivé organogélateur sont essentiellement destinées à produire des enrobés bitumineux ou des enduits superficiels pour les applications routières.

Dans le cas des enrobés bitumineux, les compositions bitumineuses comprenant le dérivé organogélateur seront mélangées avec des granulats pour fournir des enrobés bitumineux résistants aux kérosènes, aux essences et/ou aux gazoles. La quantité de composition bitumineuse comprenant le dérivé organogélateur dans l'enrobé bitumineux est comprise entre 1 et 10 % en masse, par rapport à la masse d'enrobé bitumineux, de préférence entre 2 et 8%, plus préférentiellement entre 3 et 5%, le reste étant constitués par les granulats.

Il est décrit que les enrobés bitumineux seront utilisés comme couche de surface dans des zones où la surface peut entrer en contact avec des agents chimiques agressifs tels que les hydrocarbures pétroliers ou les produits de déverglaçage, dégivrage et/ou déneigement, par exemple, en raison, d'écoulements. De telles surfaces comprennent par exemple les parcs de stationnement, les tarmacs et pistes d'aéroports, les stations-service, les ronds-points, les dépôts d'hydrocarbures.

Il est décrit que le dérivé organogélateur sera utilisé pour améliorer la résistance des compositions bitumineuses aux agressions chimiques engendrées par les hydrocarbures, en particulier les hydrocarbures pétroliers tels que les essences, les carburants, les supercarburants, les kérosènes, les carburéacteurs, les gazoles, les fuels.

De même, il est décrit que le dérivé organogélateur sera utilisé pour améliorer la résistance des compositions bitumineuses aux agressions chimiques engendrées par les produits de déverglaçage, dégivrage et/ou déneigement tels que les solutions salines aqueuses de potassium, sodium, magnésium et/ou calcium, et/ou les compositions à base d'éthylène glycol et/ou à base de propylène glycol.

Le dérivé organogélateur est efficace pour améliorer la résistance des compositions bitumineuses aux kérosènes, aux essences et/ou aux gazoles.

## EXEMPLES

La résistance aux hydrocarbures des compositions bitumineuses est évaluée selon une méthode interne proche de la méthode utilisée pour mesurer la Température Bille et Anneau des bitumes (EN 1427).

Les anneaux remplis de compositions bitumineuses sont placés dans les supports habituellement utilisés dans la méthode EN 1427, des billes de 5 g sont placées sur ces supports. Les supports sont placés dans un bécher rempli de kérosène, au lieu de l'eau habituellement utilisée dans la méthode EN 1427 standard. La résistance des compositions bitumineuses au kérosène est évaluée à température ambiante et sous agitation. On évalue la durée, le temps de ramollissement des deux disques bitumineux jusqu'à ce que chaque bille, enveloppée de compositions bitumineuses, descende d'une hauteur de (25,0 ± 0,4) mm. Le problème de la dissolution des compositions bitumineuses dans le kérosène se pose. Le liquide dans le bécher devient alors opaque, et il est impossible de savoir visuellement quand les billes tombent. Nous avons procédé par inspection en sortant les supports à intervalles de temps réguliers.

Différentes compositions bitumineuses sont préparées à partir de :

- bitume de pénétrabilité égale à 41 1/10 mm et de température Bille et Anneau égale à 51,8°C,
- copolymère dibloc de styrène et de butadiène comprenant 25% en masse de styrène, par rapport à la masse du copolymère, et 12% de motifs à double liaison 1-2 issus du butadiène, par rapport à la masse de butadiène et une masse moléculaire $M_w$ de 115000 daltons,
- soufre en fleur,
- un additif de formule générale (**I**) ne faisant pas partie de l'invention, qui est le 2',3-bis[[3-[3,5-di-tert-butyl-4-hydroxyphenyl]propionyl]]propionohydrazide ou Irganox MD1024 vendu par la société Ciba,
- un additif de formule générale (**III**) ne faisant pas partie de l'invention, qui est le 1,3:2,4-di-O-benzylidene-D-sorbitol

ou DBS,

- un additif de formule générale (**III**) ne faisant pas partie de l'invention, qui est le 1,3:2,4-bis(*p*-chlorobenzylidene) sorbitol, ou DBS chloré,
- un additif de formule générale (**IV**) selon l'invention, qui est l'acide sébacique, dans les quantités en % massiques indiquées dans le Tableau I ci-dessous.

Tableau I

| Compositions bitumineuses | $T_1$ | $T_2$ | $C_1$ | $C_2$ | $C_3$ | $C_4$ | $C_5$ |
|---|---|---|---|---|---|---|---|
| Bitume | 100 | 95,9 | 99,3 | 95,2 | 95,2 | 95,2 | 98,5 |
| Copolymère SB | - | 4 | - | 4 | 4 | 4 | - |
| Soufre | - | 0,1 | - | 0,1 | 0,1 | 0,1 | - |
| Irganox MD1024 | - | - | 0,7 | 0,7 | - | - | - |
| DBS | - | - | - | - | 0,7 | - | - |
| DBS chloré | - | - | - | - | - | 0,7 | - |
| Acide sébacique | - | - | - | - | - | 0,7 | 1,5 |

Les compositions bitumineuses sont préparées de la manière suivante :

Pour les compositions bitumineuses $C_1$ et $C_5$, on introduit un bitume dans un réacteur maintenu à 185°C sous agitation à 300 tours/min. Le contenu du réacteur est maintenu à 185°C sous agitation à 300 tours/min pendant 10 minutes. On introduit ensuite dans le réacteur l'additif de formule générale (**I**) ou (**IV**). Le contenu du réacteur est maintenu à 185°C sous agitation à 300 tours/min pendant 1 heure.

Pour la composition bitume/polymère réticulée $T_2$, on introduit dans un réacteur maintenu à 185°C et sous agitation à 300 tours/min, le bitume et le copolymère styrène/butadiène SB. Le contenu du réacteur est ensuite maintenu à 185°C sous agitation à 300 tours/min pendant 4 heures. On introduit ensuite dans le réacteur le soufre en fleur. Le contenu du réacteur est maintenu à 185°C sous agitation à 300 tours/min pendant 2 heures, puis à 185°C sous agitation à 150 tours/min pendant 12 heures.

Pour les compositions bitume/polymère réticulées $C_2$ à $C_4$, on procède de la même manière que pour la composition $T_2$ et on introduit ensuite dans le réacteur l'additif de formule générale (**I**) ou (**III**). Le contenu du réacteur est maintenu à 185°C sous agitation à 300 tours/min pendant 1 heure.

Pour les compositions bitumineuses $T_1$, $T_2$, $C_1$ à $C_5$, on détermine les caractéristiques suivantes :

(1) pénétrabilité à 25°C notée $P_{25}$ (1/10 mm) mesurée selon la norme EN 1426,

(2) température Bille et Anneau notée TBA (°C) mesurée selon la norme EN 1427,

(3) indice de Pfeiffer noté IP défini par la formule ci-dessus :

$$IP = \frac{1952 - 500 \times \log(P_{25}) - 20 \times TBA}{50 \times \log(P_{25}) - TBA - 120}$$

(4) retour élastique noté RE (%) mesuré à 25°C selon la norme NF EN 13398,

(5) le temps nécessaire pour que la bille descende d'une hauteur de (25,0 ± 0,4) mm, les résultats sont consignés dans le Tableau II ci-dessous.

Tableau II

| Compositions bitumineuses | $T_1$ | $T_2$ | $C_1$ | $C_2$ | $C_3$ | $C_4$ | $C_5$ |
|---|---|---|---|---|---|---|---|
| $P_{25}$ (1/10 mm) | 41,0 | 28,4 | 27,8 | 27,8 | 24,0 | 25,0 | 31,0 |
| TBA (°C) | 51,8 | 74,0 | 56,2 | 96,0 | 82,0 | 66,6 | 109,5 |
| IP | -1,19 | 2,09 | 1,01 | 4,79 | 2,85 | 0,68 | 6,30 |

(suite)

| Compositions bitumineuses | $T_1$ | $T_2$ | $C_1$ | $C_2$ | $C_3$ | $C_4$ | $C_5$ |
|---|---|---|---|---|---|---|---|
| RE (%) | - | 76 | - | 68 | 75 | 80 | - |
| Temps (heures) | 0,5 | 1,5 | 8,5 | 12,5 | 7,0 | 8,0 | > 24,0 |

On constate que l'utilisation d'un dérivé de type organogélateur, notamment répondant à la formule générale (**I**), (**III**) ou (**IV**) permet d'améliorer significativement la résistance au kérosène des compositions bitumineuses. Ainsi les compositions additivées $C_1$ et $C_5$ résistent respectivement pendant 8 heures et 30 minutes ou plus de 24 heures dans le bain de kérosène alors que la composition témoin $T_1$ ne résiste que 30 minutes. De même les compositions additivées $C_2$, $C_3$ et $C_4$ résistent respectivement 12 heures et 30 minutes, 7 heures et 8 heures dans un bain de kérosène alors que la composition témoin $T_2$ ne résiste que 1 heure et 30 minutes.

Des essais de résistance aux hydrocarbures sont également effectués selon la norme EN12697-43 sur des enrobés bitumineux.

Les enrobés bitumineux $EBT_1$, $EBT_2$ et $EBC_2$ comprennent respectivement 5,6% en masse de composition bitumineuse $T_1$, $T_2$ ou $C_2$, par rapport à la masse de l'enrobé bitumineux, et 94,4% en masse de granulats (composition des granulats : 38% en masse de granulats 6/10, par rapport à la masse des granulats, 5% en masse de granulats 4/6, 5% en masse de granulats 2/4, 48% en masse de sable 0/2 et 4% en masse de charges, teneur en vides 8,5-9,5%).

Les enrobés sont préparés par mélange des compositions bitumineuses et des granulats à 180°C.

Les essais sont réalisés suivant la norme EN12697-43 dans du gazole et du kérosène. Les résultats sont consignés dans le Tableau III ci-dessous.

Tableau III

| Enrobés bitumineux | $EBT_1$ | $EBT_2$ | $EBC_2$ |
|---|---|---|---|
| Résistance gazole 24 h (A/B) | 5/4 | 3/3 | 0/3 |
| Résistance gazole 72 h (A/B) | - | 4/7 | 2/5 |
| Résistance kérosène 24 h (A/B) | 13/11 | 6/5 | 1/5 |
| Résistance kérosène 72 h (A/B) | - | 9/10 | 5/10 |

On constate que l'enrobé bitumineux $EBC_2$ est plus résistant au gazole et au kérosène que les enrobés bitumineux $EBT_1$ et $EBT_2$. En effet, toutes les valeurs A et B de l'enrobé bitumineux $EBC_2$ sont inférieures ou égales à celles des enrobés bitumineux $EBT_1$ et $EBT_2$ et la somme des valeurs A et B est pour l'enrobé bitumineux $EBC_2$ bien inférieure à celle des enrobés bitumineux $EBT_1$ et $EBT_2$. L'ajout de l'additif de formule générale (**I**) dans du bitume améliore donc très nettement la résistance du bitume vis-à-vis du gazole et du kérosène.

## Revendications

1. Utilisation de 0,1 à 20% en masse d'au moins un dérivé organogélateur dans une composition bitumineuse pour améliorer la résistance aux kérosènes, aux essences et/ou aux gazoles de ladite composition bitumineuse, ledit dérivé ayant une masse molaire inférieure ou égale à 2000 $g.mol^{-1}$ et comprenant au moins un donneur de liaisons hydrogène **D,** au moins un accepteur de liaisons hydrogène **A** et au moins un compatibilisant **C** dans le bitume, le dit compatibilisant **C** comprenant un groupe choisi parmi :

    - au moins une chaîne hydrocarbonée linéaire comprenant au moins 4 atomes de carbone, ou
    - au moins un cycle aliphatique de 3 à 8 atomes, ou
    - au moins un cycle aromatique, ou
    - au moins un système polycyclique condensé aliphatique, ou en partie aromatique ou encore entièrement aromatique, chaque cycle comprenant 5 ou 6 atomes,

    pris seuls ou en mélange,
    ledit dérivé organogélateur étant choisi parmi les composés de formule générale (**IV**) suivante :

    * $R_7\text{-}(COOH)_z$ (**IV**)

avec $R_7$ qui représente le compatibilisant **C** étant une chaîne hydrocarbonée linéaire comprenant au moins 4 atomes de carbone, et z un entier égal à 2.

**2.** Utilisation selon la revendication 1 dans laquelle $R_7$ du dérivé organogélateur de formule générale (**IV**) est une chaîne hydrocarbonée linéaire comprenant de 4 à 22 atomes de carbone.

**3.** Utilisation selon l'une quelconque des revendications 1 à 2 dans laquelle le dérivé organogélateur est choisi parmi les diacides suivants : acide adipique, acide pimélique, acide subérique, acide azélaique, acide sébacique, acide undécanedioïque, acide 1,2-dodécanedioïque ou acide tétradécanedioïque, pris seuls ou en mélange.

**4.** Utilisation selon l'une quelconque des revendications 1 à 3 dans laquelle le dérivé organogélateur a une masse molaire inférieure ou égale à 1000 $g.mol^{-1}$.

**5.** Utilisation selon l'une quelconque des revendications 1 à 4 dans laquelle la composition bitumineuse comprend de 0,2 à 15% en masse de dérivé organogélateur.

**6.** Utilisation selon l'une quelconque des revendications 1 à 5 dans laquelle la composition bitumineuse comprend en outre au moins un polymère.

**7.** Utilisation selon la revendication 6 dans laquelle le polymère est un copolymère d'un hydrocarbure monovinyl aromatique et d'un diène conjugué.

**8.** Utilisation selon la revendication 7 dans laquelle le copolymère d'un hydrocarbure monovinyl aromatique et d'un diène conjugué possède une teneur en motifs à doubles liaisons 1-2 issus du diène conjugué comprise entre 5% et 50% en masse, par rapport à la masse totale des motifs diène conjugué.

**9.** Utilisation selon l'une quelconque des revendications 1 à 8 dans laquelle la composition bitumineuse comprend un agent réticulant.

**10.** Utilisation selon l'une quelconque des revendications 1 à 9 pour améliorer la résistance aux kérosènes, aux essences et/ou aux gazoles de la composition bitumineuse lorsque celle-ci est utilisée en application routière comme couche de surface ou lorsque celle-ci est en mélange avec des granulats dans un enrobé bitumineux.

## Patentansprüche

**1.** Verwendung von 0,1 bis 20 Massen-% von mindestens einem Organogelbildner-Derivat in einer bitumösen Zusammensetzung zur Verbesserung der Festigkeit dieser bitumösen Zusammensetzung gegen Kerosine, Benzin und/oder Gasöle, wobei das Derivat eine Molmasse aufweist, die kleiner oder gleich 2000 $g.mol^{-1}$ ist und mindestens einen Wasserstoffbindungs-Donor **D,** mindestens einen Wasserstoffbindung-Akzeptor **A** und mindestens ein Kompatibilisierungsmittel **C** im Bitumen umfasst, wobei das Kompatibilisierungsmittel **C** eine Gruppe umfasst, die ausgewählt ist aus:

- mindestens einer linearen Kohlenwasserstoffkette, die mindestens 4 Kohlenstoff-Atome umfasst, oder
- mindestens einem aliphatischen Ring aus 3 oder 8 Atomen, oder
- mindestens einem aromatischen Ring, oder
- mindestens einem kondensierten polycyclischen aliphatischen, oder teilaromatischen oder auch vollaromatischen System, wobei jeder Ring 5 oder 6 Atome umfasst,

alleine oder im Gemisch,
und wobei das Organogelbildner-Derivat ausgewählt ist aus den Verbindungen der folgenden allgemeinen Formel:

• $R_7\text{-}(COOH)_z$ **(IV)**

wobei $R_7$ das Kompatibilisierungsmittel **C** als eine mindestens 4 Kohlenstoff-Atome umfassende lineare Kohlenwasserstoffkette und z eine ganze Zahl gleich 2 darstellen.

2. Verwendung nach Anspruch 1, wobei $R_7$ des Organogelbildner-Derivats der allgemeinen Formel **(IV)** eine 4 bis 22 Kohlenstoff-Atome umfassende lineare Kohlenwasserstoffkette darstellt.

3. Verwendung nach einem der Ansprüche 1 bis 2, wobei das Organogelbildner-Derivat aus den folgenden Disäuren ausgewählt ist: Adipinsäure, Pimelinsäure, Korksäure, Azelainsäure, Sebacinsäure, Undecandisäure, 1,2-Dodecandisäure oder Tetradecandisäure, alleine oder im Gemisch.

4. Verwendung nach einem der Ansprüche 1 bis 3, wobei das Organogelbildner-Derivat eine Molmasse aufweist, die kleiner oder gleich 1000 $g.mol^{-1}$ ist.

5. Verwendung nach einem der Ansprüche 1 bis 4, wobei die bitumöse Zusammensetzung 0,2 bis 15 Massen-% von Organogelbildner-Derivat umfasst.

6. Verwendung nach einem der Ansprüche 1 bis 5, wobei die bitumöse Zusammensetzung ferner mindestens ein Polymer umfasst.

7. Verwendung nach Anspruch 6, wobei das Polymer ein Copolymer eines monovinylaromatischen Kohlenwasserstoffs und eines konjugierten Diens ist.

8. Verwendung nach Anspruch 7, wobei das Copolymer eines monovinylaromatischen Kohlenwasserstoffs und eines konjugierten Dien, im Verhältnis zur Gesamtmasse der konjugierten Dieneinheiten, einen Gehalt von Einheiten mit 1-2 Doppelbindungen aus dem konjugierten Dien aufweist, der im Bereich von 5 und 50 Massen-% liegt.

9. Verwendung nach einem der Ansprüche 1 bis 8, wobei die bitumöse Zusammensetzung ein Vernetzungsmittel umfasst.

10. Verwendung nach einem der Ansprüche 1 bis 9 zur Verbesserung der Festigkeit der bitumösen Zusammensetzung gegen Kerosine, Benzin und/oder Gasöle, wenn diese für Straßenbauzwecke als Oberflächenschicht benutzt wird oder wenn sie aus einer Vermischung mit Granulaten in einer Bitumendeckschicht besteht.

## Claims

1. Use of 0.1 to 20% by mass of at least one organogelator derivative in a bituminous composition for improving resistance to kerosenes, gasolines and/or gasoils of said bituminous composition, said derivative having a molar mass of less than or equal to 2,000 $g \cdot mol^{-1}$ and comprising at least one donor of hydrogen bonds **D**, at least one acceptor of hydrogen bonds **A** and at least one compatibilizer **C** in the bitumen, said compatibilizer **C** comprising a group selected from:

    - at least one linear hydrocarbon chain comprising at least 4 carbon atoms, or
    - at least one aliphatic cycle with 3 to 8 atoms, or
    - at least one aromatic cycle, or
    - at least one aliphatic or partly aromatic or further entirely aromatic fused polycyclic system, each cycle comprising 5 or 6 atoms,

   taken alone or as a mixture,
   wherein said organogelator derivative being selected from the compounds of following general formula **(IV)**:

   $$* R_7\text{-}(COOH)_z \qquad \textbf{(IV)}$$

   with $R_7$ which represents the compatibilizer **C** being a linear hydrocarbon chain comprising at least 4 carbon atoms, and z is an integer equal to 2.

2. Use according to claim 1, wherein $R_7$ of the organogelator derivative of general formula **(IV)** is a linear hydrocarbon chain comprising from 4 to 22 carbon atoms.

3. Use according to any one of claims 1 to 2, wherein the organogelator derivative is selected from the following diacids: adipic acid, pimelic acid, suberic acid, azelaic acid, sebacic acid, undecanedioic acid, 1,2-dodecanedioic acid or

tetradecanedioic acid, taken alone or as a mixture.

4. Use according to any one of claims 1 to 3, wherein the organogelator derivative has a molar mass of less than or equal to 1,000 g·mol$^{-1}$.

5. Use according to any one of claims 1 to 4, wherein the bituminous composition comprises from 0.2 to 15% by mass of organogelator derivative.

6. Use according to any one of claims 1 to 5, wherein the bituminous composition further comprises at least one polymer.

7. Use according to claim 6, wherein the polymer is a copolymer of a monovinylaromatic hydrocarbon and a conjugate diene.

8. Use according to claim 7, wherein the copolymer of a monovinylaromatic hydrocarbon and a conjugate diene has a content of 1-2 double bonds units from the conjugate diene comprised between 5% and 50% by mass, based on the total mass of the conjugate diene units.

9. Use according to any one of claims 1 to 8, wherein the bituminous composition comprises a cross-linking agent.

10. Use according to any one of claims 1 to 9, for improving the resistance to kerosenes, gasolines and/or gasoils of the bituminous composition when the latter is utilized in a roadway application as a surface layer or when the latter is mixed with aggregates in a bituminous mix.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1311619 A
- EP 1756228 A
- EP 1572807 A
- EP 0900253 A
- WO 2006087475 A
- WO 2008107551 A